# EUROPEAN PATENT SPECIFICATION

(11) **EP 2 243 802 B1**
(45) Date of publication and mention of the grant of the patent: **13.09.2017**
(21) Application number: 10160141.7
(22) Date of filing: 16.04.2010
(51) Int. Cl.: C08J 9/00, D06N 3/00, B29C 41/14, D06M 15/03, D06M 15/09, D06M 15/31, D06M 23/16, D06M 23/08, D06M 23/04, D06M 15/693, B29L 31/48, D06M 15/01, D06M 15/227, D06M 15/285, D06M 15/263, D06M 15/233, D06M 15/333

(54) **Foamed polymer and its use in the manufacture of gloves**
Geschäumtes Polymer und deren Anwendung zur Herstellung von Handschuhen
Polymère expansé et son utilisation pour la fabrication de gants

(30) Priority: 20.04.2009 GB 0906727
(43) Date of publication of application: 27.10.2010
(73) Proprietor: Midas Safety Innovations Limited, St. Helier Jersey JE2 3QA (GB)
(72) Inventor: Kassam, Mikhail, Toronto Ontario M2P 1M3 (CA); Navrozally, Aziz, Markham Ontario L3R 4V6 (CA); Jaffer, Akil, Markham Ontario L3R 4S3 (CA)
(74) Representative: Wilkinson, Stephen John

(56) References cited:
- EP-A1- 1 608 808
- CA-C- 1 283 753
- US-A- 5 011 864
- US-A- 5 169 575
- US-A- 5 336 695

## Description

The present invention relates to methods for manufacturing foamed polymers, to methods for manufacturing garments comprising the foamed polymers and to gloves having foamed polymer layers.

It is known to produce foamed polymers using blowing agents or by introducing gas bubbles into polymers.

However, the use of blowing agents can lead to environmental problems because many blowing agents are pollutants.

The use of conventional incorporated gas polymer foams also has disadvantages, especially in foam coating because foams with a large amount of incorporated gas have too low a density to flow or drain efficiently. There have been attempts to overcome this problem.

For example, EP-A-1608808 describes a process for making gloves involving foam dip coating a textile liner and including a step of actively removing excess foam by directing a liquid at the excess foam. Unfortunately, this process has disadvantages because the extra step slows production, and causes additional effluent (with consequent environmental problems).

Other attempts to obviate the disadvantages of foams in gloves manufacturing including restricting the amount of air incorporated into the dipping dispersion as in WO-A-2004/093580 or by avoiding the use of foams but adding a soluble salt to the dipped compound, to form a textured surface after washing as in US-A-2005/0035493. Unfortunately, these approaches also lead to unnecessary effluent.

A further problem of conventional foam coating, especially in garments such as gloves, is that the nature of the foamed polymer may allow too rapid ingress of water, oil or other chemicals (e.g. glues).

US 5,336,695 discloses a process for the manufacture of hydrophilic foams which comprises combining and mixing together a polyether-polyol, a diisocyanate, a superabsorber, an accelerator for polyurethanes and water, and foaming the mixture mechanically and/or by the introduction of gas. The foam can be applied to two-dimensional bases such as woven and non-woven fabrics and films. In this process, the superabsorber is used to attract and retain water in the foamed polymer system. US 5,011,864 also relates to the manufacture of a water absorbent polymer foam. In particular, this document discloses a water absorbent latex polymer foam, containing chitin, prepared by a process comprising preparing a foamable latex polymer material, foaming this to form a latex polymer foam, blending the latex foam with water absorbent polymer and chitin and drying the blend. Such water absorbent latex polymer foam has use in the manufacture of wound or surgical dressings.

It is an aim of the present invention to overcome the disadvantages of the prior art.

The present invention accordingly provides a method for manufacturing a foamed polymer, the method comprising:
providing a precursor dispersion comprising a latex or plastisol of a gellable polymer, particles of a water-swellable polymer comprising less than 30% by weight of a water-swellable material, and water, and gelling the gellable polymer to form a gelled polymer; and
drying the gelled polymer, which results in the contraction of the particles of the water-swellable polymer leaving voids in the solid polymer, so as to produce a foamed polymer.

The precursor dispersion comprises a latex or plastisol of a gellable polymer. The more preferred latex is a latex of natural rubber, homopolymers or copolymers, for example, isoprene, chloroprene, acrylic ester acrylonitrile-butadiene copolymers, nitrile rubber, polychloroprene, styrene butadiene copolymers, butyl rubber, polybutadiene rubber, polyurethane or silicone.

Preferably the water-swellable polymer is a natural polymer, a modified natural polymer, a polyacrylate or a polyamide. In particular, the water-swellable polymer is preferably selected from gelatine, modified starch, modified cellulose, sodium polyacrylate, polyacrylamide copolymer, ethylene maleic anhydride copolymer, cross-linked carboxy methyl cellulose, polyvinyl alcohol copolymer, cross-linked polyethylene oxide, or a starch grafted copolymer of polyacrylonitrile.

Of these, the most preferred water-swellable polymer is cross-linked carboxy methyl cellulose.

The great advantage of the method of the present invention is that a precursor dispersion can be prepared which enables a foamed polymer to be produced, but without the disadvantages of the prior art in that the use of the foamed polymer obviates the need for blowing agents and their possible environmental disadvantages. Furthermore, because the water-swellable polymer swells in water and will, as a matter of course, contract after the gellable polymer has gelled and dried to form a solid polymer, the method of the present invention does not lead to unnecessary additional effluent being created.

Preferably, the pH of the precursor dispersion is in the range 8.5 to 11. This is advantageous because, surprisingly, water-swellable polymers (especially crosslinked carboxy methyl cellulose) swell more rapidly in alkaline pH. pH higher than about 11 is not preferred because it may lead to destabilisation of some components of the precursor dispersion.

Generally, the water-swellable polymer will expand very significantly in the presence of water. In the case of cross-linked carboxy methyl cellulose, this expansion might be 10, 20 or more times its original size. This swelling, in the precursor of the gellable polymer, means that when the gellable polymer has been gelled, drying of the gelled polymer, including the water-swellable polymer, will result in contraction of the particles and in voids being formed in the solid polymer. Very surprisingly, subsequent immersion of the foamed polymer in water does not result in the particles swelling to the same extent nor as rapidly as in the manufacturing process. Thus, a foam polymer can be produced without the need to use blowing agents, or introduction of air by mechanical means.

Drying of the polymer may involve merely allowing the gelled polymer to dry at around room temperature. Alternatively, the gelled polymer may be heated at a temperature of, preferably, less than 120°C, more preferably less than 110°C, most preferably less than 100°C in order to speed up drying of the water swollen polymer particles and foamed polymer.

The water-swellable polymer comprises less than 30%, more preferably less than 20% and most preferably less than 15% by weight of water soluble material. This is because a significant amount of water soluble material may increase the viscosity of the precursor dispersion affecting the ease of use of the precursor dispersion.

Generally, the amount of water swollen particles of the water-swellable polymer in the precursor dispersion will depend on the intended use. In one, preferred, embodiment, the water swollen particles of the water-swellable polymer (i.e. after the particles have swollen in the presence of water) will form less than 50% by volume of the precursor dispersion. More preferably, the water swollen particles will form less than 30%, less than 25%, less than 20%, less than 15% by volume of the precursor dispersion.

The method of the present invention may further comprise introducing gas into the precursor dispersion to form a foam. The gas is preferably air. Introducing air into the precursor dispersion is preferably by (vigorously) agitating the precursor dispersion.

The advantages of having both air and water-swellable particles in the precursor dispersion is that the voids in the solid polymer, once formed, can be modified by adjusting the relative content of gas and/or water-swellable particles in the precursor dispersion. This can enable the solid polymer, once formed, to have voids of different sizes or different distribution of sizes which has significant advantages in a number of applications. Voids of differing sizes can be particularly important when the foamed polymer is used to coat garments because the different sizes of voids can improve the surface properties of the foamed polymer, in particular, (e.g. in the case of gloves) gripping properties.

It is preferred if less than 30%, more preferably less than 25%, most preferably less than 20% by volume gas is introduced into the precursor dispersion.

According to an embodiment, the method for manufacturing a foamed polymer comprises:
providing a precursor dispersion comprising a latex or plastisol of a gellable polymer, particles of a water-swellable polymer comprising less than 30% by weight of water soluble material, and water;
adding gas to the precursor dispersion to form a foam;
gelling the gellable polymer to form a gelled polymer; and
drying the gelled polymer, which results in contraction of the particles of the water-swellable polymer leaving voids in the solid polymer, so as to produce a foamed polymer.

In all the aspects of the present invention, it is preferred if the gellable polymer is gellable by means of a coagulating agent. This would apply, for example, if the precursor was a latex of natural rubber, homopolymers or copolymers, for example, isoprene, chloroprene, acrylic ester acrylonitrile-butadiene copolymers, nitrile rubber, polychloroprene, styrene butadiene copolymers, butyl rubber, polybutadiene rubber, polyurethane or silicone.

Thus, preferably the method further comprises contacting the precursor dispersion with a coagulating agent to gel the gellable polymer.

Preferably, the coagulating agent comprises a water soluble nitrate or chloride, an alcohol (especially methanol), acetic acid, ascorbic acid or citric acid. In the most preferred embodiment, the coagulating agent comprises a calcium salt, most preferably calcium nitrate.

One use of the present invention is in dip coating substrates in order to form layers of foamed polymer. Thus, in a preferred embodiment, the invention further comprises dipping of a former into the precursor dispersion and gelling the gellable polymer. The former may be at least partially covered by a liner, preferably a textile liner. This is of particular use if the method is to be used to form a garment.

It is preferred (if the gellable polymer can be gelled using a coagulating agent) if the former is at least partially coated with coagulating agent before dipping. This may be achieved by dipping the former into a dispersion or solution of the coagulating agent and optionally drying the coagulating agent after removal of the former from the coagulating agent dispersion.

Depending on the application to which the method is to be used, the former may be coated with one or more layers of polymer either before or after dipping the former in the precursor dispersion. In this way, multilayer product may be formed, one of the layers being the layer of foamed polymer.

The present invention provides, in a second aspect, a method for manufacturing a garment, the method comprising:
a) providing a former;
b) optionally covering the former with a liner;
c) providing a precursor dispersion comprising a latex or plastisol of a gellable polymer, particles of a water-swellable polymer comprising less than 30% by weight of water soluble material, and water;
d) dipping the former in the precursor dispersion to form a layer of the precursor of a gellable polymer on the former;
e) removing the former from the precursor dispersion;
f) drying the gelled polymer which results in contraction of the particles of the water-swellable polymer leaving voids in the solid polymer, so as to produce a foamed polymer.

According to an embodiment, the method for manufacturing a garment comprises:
a) providing a former;
b) optionally covering the former with a liner;
c) providing a precursor dispersion comprising a latex or plastisol of a gellable polymer, particles of a water-swellable polymer comprising less than 30% by weight of water soluble material, and water;
d) introducing gas into the precursor dispersion to form a foam;
e) dipping the former in the precursor dispersion to form a layer of the precursor of a gellable polymer on the former;
f) removing the former from the precursor dispersion;
g) gelling the gellable polymer; and
h) drying the gelled polymer, which results in contraction of the particles of the water-swellable polymer leaving voids in the solid polymer, so as to produce a foamed polymer.

Garments according to the present invention are preferably gloves but may, alternatively, be socks or some other garment. The liner is preferably a textile liner. The textile liner preferably comprises one or more or a blend of two or more of nylon, cotton, spandex, lycra, polyester, aramid, dyneema, acrylic, carbon conductive fibre, copper conductive fibre, thunderon conductive fibre, multifilament yarn spun from liquid crystal polymer (available under the brand name Vectran™), tacte1, CoolMax™, ThermaStat™, Thermax™ and Viafil (RTM).

The liner may be a non-woven, a woven or a knitted textile liner and is preferably knitted, more preferably weft knitted.

According to an embodiment, the garment is a glove comprising a liner and at least one foamed polymer layer coated on the liner, the formed polymer layer comprising micropores formed by water swelling and contraction of particles of a water-swellable polymer and, optionally, mesopores formed by gas incorporated in the foamed polymer.

According to a different embodiment, the garment is an unsupported glove comprising at least one layer of a foamed polymer, the foamed polymer layer comprising micropores formed by water swelling and contracting of particles of a water-swellable polymer and mesopores formed by gas incorporated in the foamed polymer.

The method of production of a glove comprising a liner involves typically the following stages:
a) providing a former in the shape and size required of the glove.
b) covering the former, at least partially, with a liner (preferably a textile liner) of a suitable material.
c) dipping the former and liner in a dispersion of a coagulating agent (most preferably calcium nitrate dispersion in alcohol/ water preferably methanol/water),
d) withdrawing the former and liner from the coagulating agent dispersion and, optionally drying the former and liner.
e) dipping the liner and former in the precursor dispersion prepared as discussed above.
f) withdrawing the liner and former from the precursor dispersion.
g) allowing the liner and former to drain.
h) dipping the liner and former in a second coagulating dispersion which may be, for example, calcium nitrate in methanol/water, or acetic acid in methanol/water, optionally drying after coagulation.
i) preferably leaching the gloves in water dispersion to remove excess coagulating agent and/or surfactants etc. followed by oven dying at 80 to 105°C.

Generally as the glove is removed from the precursor dispersion, it is covered with the gellable polymer and the coagulating agent acts to coagulate the polymer in the precursor dispersion thereby forming a layer on the surface of the liner.

As the glove dries, the water swellable particles in the glove contract leaving voids in the coagulated polymer and therefore providing an foamed polymer coating on the liner. If air is present in the precursor dispersion, then the finished glove will tend to have voids of a distribution of sizes: relatively large pores (often known as mesopores) formed by the presence of gas in the precursor dispersion as a foam, and relatively small pores (micropores) formed by the voids of the water swollen particles after contraction.

The process for producing an unsupported glove typically has the following steps.
a) a former of appropriate shape is dipped in a coagulating dispersion.
b) after optional drying, the former is dipped in a precursor dispersion which is to provide a layer which is the outside (grip) surface of the glove.
c) the former is removed from the precursor dispersion and the polymer starts to coagulate.
d) after a post dipping coagulation dip, the glove is dipped in a further dispersion of, usually, latex to provide a second, inner layer, to the glove.
e) optionally, the glove is then coated with a liner which may be, for example, flock.

There may also be optional leaching steps and/or drying steps at various stages in the process.

After drying, the finished glove is reversed off the former so that the layer which was first deposited on the former becomes the outer surface of the glove.

In a supported glove, the dipping process may be controlled so that the precursor dispersion does not fully penetrate the liner. In this way, the glove would have an inner surface that does not have exposed polymeric material, which is advantageous because some people have an allergic reaction to components in natural rubber or other polymers next to the skin. The non-penetrated portion of the liner would form a barrier between the wearer of the gloves and the coating of the polymeric material. Penetration of the dispersion into the liner may be controlled by modifying the viscosity of the precursor dispersion, controlling the time of dip and controlling the amount and concentration of coagulating agent on the liner. In addition, penetration of the polymer material into the liner, may be controlled by having a first, polymer layer on the liner. A first, solid polymer layer reduces or stops chemical ingress if the garment is to be used in the presence of noxious chemicals, including oils and glues.

A solid (i.e. non-foamed) polymer layer is also advantageous on unsupported gloves essentially for similar reasons. However, in the case of unsupported gloves, because of the way in which an unsupported glove is manufactured, the solid polymer layer would be deposited on the former after the foamed polymer layer.

After the deposition of the foamed polymer layer, a pattern may be applied using a heated pattern mould. This would be advantageous, in particular for gloves, because it may improve the grip on the gripping surface of the gloves.

Gloves produced according to the process of the present invention advantageously have micropores on the surface of the foamed polymer layer. There are typically between five and 50 pores/mm², more preferably between 10 and 40 pores/mm² and most preferably between 15 and 25 pores/mm². The control of the pore size and frequency is due to the particle size of the water swellable particles and the content of the water swellable particles in the dispersion.

Typically, foamed polymers according to the methods of the present invention are open cell as opposed to closed cell. This is advantageous because the foamed polymer is breathable (which is particularly advantageous when, for example, the foamed polymer is used to manufacture gloves) but nevertheless because of the microporous nature of the voids, may inhibit oil and glue penetration of the foamed polymer layer. In combination, the microporous surface and the relative inhibition of oils and glue into the foamed polymer enhances oil and wet grip when used on a glove. Further improved oil and wet grip is provided where gas is introduced into the precursor dispersion thereby providing both a microporous and a mesoporous surface on the foamed polymer layer.

Embodiments of the invention will now be described with reference to the following Examples.

### Example 1

In this example, a glove was produced having a liner and an foamed polymer coating on the liner. The foamed polymer coating has a micropores formed using water swellable particles.

The glove was manufactured in the flowing way,
1. a hand shaped former of the appropriate size was maintained at room temperature.
2. a textile liner of 15 gauge knitted nylon was loaded on the former.
3. a coagulating agent dispersion of 2.5% calcium nitrate and methanol in water was prepared.
4. the former with the liner was dipped in the precoagulating agent dispersion and removed.
5. after air drying for 70 seconds with the former in the down position and then 70 seconds with the former in the up position, the former and liner were dipped in the precursor dispersion at a slow dipping speed with two to three seconds dwell time.
6. after removal of the former from the precursor dispersion at a slow rate, the former was allowed to drain at 10 seconds in the downward position and 10 seconds in the upwards position.
7. a second, post coagulant treatment was conducted by dipping the former in a 15% calcium nitrate dispersion rapidly.
8. the polymer layer was allowed to gel for 15 minutes in the downward position at room temperature.
9. following this, the glove was pre-leached in water for 15 minutes at 30°C.
10. Finally, the former and glove were oven dried for 60 minutes at 80 to 110°C.

The precursor dispersion used in this example consisted of the components as listed in Table 1.

The viscosity of the dispersion was 280 to 320 cP. There was no air foam introduced in the precursor dispersion. The totals solids content was between 23 and 25 wt %. The pH of the dispersion was 8.5 to 9.0. Before dipping, the precursor dispersion was allowed to mature for 12 hours.

The swellable particles used in this example were cross-linked carboxy methyl cellulose obtained from FMC Corporation having a content of water soluble material of 1.0 to 10.0 % by weight. Significantly more water soluble material can adversely affect the viscosity of the precursor dispersion as shown by the use of non-crosslinked carboxyl methyl cellulose as a thickener. It is preferred if the content of water soluble material is less than 30%, preferably less than 20% and most preferably below 15%.

Gloves produced according to this example have properties of grip and oil and water permeability as indicated in Table 2.

### Example 2

In Example 2 a mixed mesoporous, microporous foam glove with liner was produced by introducing air into the precursor dispersion. The dipping process was conducted according to the procedure in Table 3. Air was introduced by agitation of the precursor dispersion in air.

The formulation of the precursor dispersion was as indicted in Table 1.

The oil and water grip and permeability properties of glove produced by this process are as indicated in Table 2.

**Table 1**

| | **Formulation** | **Dry weight/arbitrary units** |
|---|---|---|
| 1. | 45% Nitrile latex (NVT supplied by Polymer Latex) | 100.00 |
| 2. | 30% Anionic surfactant (CALSOFT Pilot Chemicals) | 0.2 |
| 3. | 50% Pre-dispersed blue pigment (LIGHT BLUE 5338) | 2.0 |
| 4. | 50% Ground sulphur, 50% zinc diethyl dithio carbamate, 50% ZnO at 1:1:2 ratio | 4.0 |
| 5. | 50% Wax emulsion (HYDROWAX 315) | 3.0 |
| 6. | 5% Cross-linked carboxy methyl cellulose, (1% to 10% water soluble material) | 0.8 |
| 7. | 45% Antimicrobial sanitizing dispersion (antifungal etc.) | 0.25 |
| 8. | 5% non-cross-linked carboxy methyl cellulose (Methocel HPM 450 DS) as thickener - fully soluble in water | Various, depending on desired viscosity |

**Table 2**

| Example | Dry Grip | | Wet Grip | | Oil Grip | | Water Permeability | Oil Permeability | Wearer Trials | Abrasion | | |
|---|---|---|---|---|---|---|---|---|---|---|---|---|
| | Metal Rod | Glass Rod | Metal Rod | Glass Rod | Metal Rod | Glass Rod | | | | Level | No. Cycles | Weight Loss |
| | | | | | | | | | | | | |
| 1 | 10 | 10 | 2 | 1 | NIL | NIL | 240s slightly pass through | Did not pass through | 17 | 4 | 8000 | 146mg |
| 2 | 10 | 10 | 8 | 5 | 6 | 2 | 24 s | 150 s | 11 | 1 | 236 | 18 mg |
| Comp A | 10 | 10 | 1 | NIL | NIL | NIL | Did not pass through | Did not pass through | 20 | 4 | 8000 | 121 mg |
| Comp B | 10 | 10 | 8 | NIL | NIL | 8 | 18 s | 70s | 13 | 3 | 2580 | 65 mg |

Table 2. In the table, grip is indicated by a number from 1 to 10. The higher the number, the better the grip. The permeability tests involved placing a drop of liquid on the glove and measuring the time for ingression. The wearer trials relate to durability as assessed by a wearer in use. The higher the number, the better the perceived durability. Abrasion tests were according to EN388: 2003.
Comparative Example A is solid (i.e. non foam) nitrile (Nitrilon) glove.
Comparative Example B is a conventional air-foamed nitrile glove.

**Table 3**

| **Dipping Process** | |
|---|---|
| Pre-Coagulant | 2.5% Calcium Nitrate in Methanol |
| Drying Time | 90 Seconds Up, 90 Seconds Down |
| Compound Viscosity | 280 cps |
| Air % Volume | 15% |
| Dip Time | Slow Dipping |
| Post-Coag | 6% Acitic Acid in Methanol |
| Gelling | 10 Minutes |
| Leaching | 15 Minutes |
| Draining | 10 Minutes |
| Curing | 80 Minutes at 80°C |

As indicated by the results in Table 2, gloves having foam polymer layers produced according to the invention have very much slower water and oil ingress than conventional foam polymer coated gloves. Both Example 1 and (especially) 2 also have excellent grip properties.

## Claims

1. A method for manufacturing a foamed polymer, the method comprising,
providing a precursor dispersion comprising a latex or plastisol of a gellable polymer, particles of a water-swellable polymer comprising less than 30% by weight of water soluble material, and water;
gelling the gellable polymer to form a gelled polymer; and drying the gelled polymer, which results in contraction of the particles of the water-swellable polymer leaving voids in the solid polymer, so as to produce a foamed polymer.

2. A method as claimed in claim 1, wherein the precursor of the gellable polymer is a latex of natural rubber, homopolymers or copolymers.

3. A method as claimed in claim 2, wherein the latex is isoprene, chloroprene, acrylic ester acrylonitrile-butadiene copolymers, nitrile rubber, polychloroprene, styrene butadiene copolymers, butyl rubber, polybutadiene rubber, polyurethane or silicone.

4. A method as claimed in any one of the preceding claims, wherein the water-swellable polymer is a natural polymer, a modified natural polymer, a polyacrylate or a polyamide.

5. A method as claimed in any one of the preceding claims, wherein the water-swellable polymer is selected from gelatine, modified starch, modified cellulose, sodium polyacrylate, polyacrylamide copolymer, ethylene maleic anhydride copolymer, cross-linked carboxy methyl cellulose, polyvinyl alcohol copolymer, cross-linked polyethelene oxide, or a starch grafted copolymer of polyacrylonitrile.

6. A method as claimed in any one of the preceding claims, wherein the water swollen particles of the water-swellable polymer forms less than 30% by volume of the precursor dispersion.

7. A method as claimed in any one of the preceding claims, further comprising contacting the precursor dispersion with a coagulating agent to gel the gellable polymer.

8. A method as claimed in any one of the preceding claims, further comprising dipping a former into the precursor dispersion and gelling the gellable polymer.

9. A method as claimed in claim 8, wherein the former is at least partially covered by a liner.

10. A method as claimed in either claim 8 or claim 9, wherein the former is at least partially coated with the coagulating agent before dipping.

11. A method for manufacturing a garment, the method comprising:
a) providing a former;
b) optionally covering the former with a liner;
c) providing a precursor dispersion comprising a latex or plastisol of a gellable polymer, particles of a water-swellable polymer comprising less than 30% by weight of water soluble material, and water;
d) dipping the former in the precursor dispersion to form a layer of the precursor of a gellable polymer on the former;
e) removing the former from the precursor dispersion;
f) gelling the gellable polymer; and
g) drying the gelled polymer, which results in contraction of the particles of the water-swellable polymer leaving voids in the solid polymer, so as to produce a foamed polymer.

## Patentansprüche

1. Verfahren zur Herstellung eines aufgeschäumten Polymers, wobei das Verfahren Folgendes umfasst:
Bereitstellen einer Vorläuferdispersion, die einen Latex oder ein Plastisol eines gelierfähigen Polymers, Partikel eines in Wasser quellbaren Polymers mit weniger als 30 Gew.-% an wasserlöslichem Material und Wasser umfasst;
Gelieren des gelierfähigen Polymers zum Bilden eines gelierten Polymers; und
Trocknen des gelierten Polymers, was zum Zusammenziehen der Partikel des mit Wasser quellbaren Polymers führt, so dass Poren in dem festen Polymer bleiben, um ein aufgeschäumtes Polymer zu bilden.

2. Verfahren nach Anspruch 1, wobei der Vorläufer des gelierfähigen Polymers ein Latex aus Naturkautschuk, Homopolymeren oder Copolymeren ist.

3. Verfahren nach Anspruch 2, wobei der Latex Isopren, Chloropren, Acrylester-Acrylnitril-Butadien-Copolymere, Nitrilkautschuk, Polychloropren, Styrol-Butadien-Copolymere, Butylkautschuk, Polybutadienkautschuk, Polyurethan oder Silikon ist.

4. Verfahren nach einem der vorherigen Ansprüche, wobei das in Wasser quellbare Polymer ein natürliches Polymer, ein modifiziertes natürliches Polymer, ein Polyacrylat oder ein Polyamid ist.

5. Verfahren nach einem der vorherigen Ansprüche, wobei das in Wasser quellbare Polymer ausgewählt ist aus Gelatine, modifizierter Stärke, modifizierter Cellulose, Natriumpolyacrylat, Polyacrylamid-Copolymer, Ethylen-Maleinsäureanhydrid-Copolymer, vernetzter Carboxymethylcellulose, Polyvinylalkohol-Copolymer, vernetztem Polyethylenoxid oder einem stärkegepfropften Copolymer von Polyacrylnitril.

6. Verfahren nach einem der vorherigen Ansprüche, wobei die in Wasser gequollenen Partikel des in Wasser quellbaren Polymers weniger als 30 Vol.-% der Vorläuferdispersion bilden.

7. Verfahren nach einem der vorherigen Ansprüche, das ferner das Inkontaktbringen der Vorläuferdispersion mit einem Koagulationsmittel zum Gelieren des gelierfähigen Polymers umfasst.

8. Verfahren nach einem der vorherigen Ansprüche, das ferner das Eintauchen eines Formers in die Vorläuferdispersion und das Gelieren des gelierfähigen Polymers umfasst.

9. Verfahren nach Anspruch 8, wobei der Former wenigstens teilweise mit einem Liner bedeckt wird.

10. Verfahren nach Anspruch 8 oder Anspruch 9, wobei der Former vor dem Eintauchen wenigstens teilweise mit dem Koagulationsmittel beschichtet wird.

11. Verfahren zur Herstellung eines Kleidungsstücks, wobei das Verfahren Folgendes umfasst:
a) Bereitstellen eines Formers;
b) optional Bedecken des Formers mit einem Liner;
c) Bereitstellen einer Vorläuferdispersion, die einen Latex oder ein Plastisol aus einem gelierfähigen Polymer, Partikel eines in Wasser quellbaren Polymers mit weniger als 30 Gew.-% an wasserlöslichem Material und Wasser umfasst;
d) Eintauchen des Formers in die Vorläuferdispersion zum Bilden einer Schicht aus dem Vorläufer aus einem gelierfähigen Polymer auf dem Former;
e) Entfernen des Formers aus der Vorläuferdispersion;
f) Gelieren des gelierfähigen Polymers; und
g) Trocknen des gelierten Polymers, was zum Zusammenziehen der Partikel des in Wasser quellbaren Polymers führt, so dass Poren im festen Polymer bleiben, um ein aufgeschäumtes Polymer zu produzieren.

## Revendications

1. Procédé de fabrication d'un polymère expansé, le procédé consistant à
fournir une dispersion de précurseur constituée d'un latex ou d'un plastisol d'un polymère gélifiable, de particules d'un polymère gonflable dans l'eau comprenant moins de 30% en poids de matière soluble dans l'eau, et d'eau ;
gélifier le polymère gélifiable pour former un polymère gélifié ; et
sécher le polymère gélifié, ce qui entraîne une contraction des particules du polymère gonflable dans l'eau laissant des vides dans le polymère en bloc, de manière à produire un polymère expansé.

2. Procédé selon la revendication 1, **caractérisé en ce que** le précurseur du polymère gélifiable est un latex de caoutchouc naturel, ses homopolymères ou ses copolymères.

3. Procédé selon la revendication 2, **caractérisé en ce que** le latex est de l'isoprène, du chloroprène, des copolymères d'esters acryliques de l'acrylonitrile et du butadiène, du caoutchouc nitrile, du polychloroprène, des copolymères du styrène et du butadiène, du caoutchouc butylique, du caoutchouc de polybutadiène, du polyuréthane ou de la silicone.

4. Procédé selon l'une quelconque des revendications précédentes, **caractérisé en ce que** le polymère gonflable dans l'eau est un polymère naturel, un polymère naturel modifié, un polyacrylate ou un polyamide.

5. Procédé selon l'une quelconque des revendications précédentes, **caractérisé en ce que** le polymère gonflable dans l'eau est choisi parmi la gélatine, l'amidon modifié, la cellulose modifiée, le polyacrylate de sodium, un copolymère de polyacrylamide, un copolymère d'éthylène et d'anhydride maléique, la carboxyméthylcellulose réticulée, un copolymère de l'alcool polyvinylique, un oxyde de polyéthylène réticulé, ou un copolymère de polyacrylonitrile greffé d'amidon.

6. Procédé selon l'une quelconque des revendications précédentes, **caractérisé en ce que** les particules gonflées d'eau du polymère gonflable dans l'eau forment moins de 30% en volume de la dispersion de précurseur.

7. Procédé selon l'une quelconque des revendications précédentes, **caractérisé en outre par** la mise en contact de la dispersion de précurseur avec un agent coagulant pour gélifier le polymère gélifiable.

8. Procédé selon l'une quelconque des revendications précédentes, **caractérisé en outre en ce qu'**un support est immergé dans la dispersion de précurseur et la gélification du polymère gélifiable.

9. Procédé selon la revendication 8, **caractérisé en ce que** le support est au moins partiellement recouvert d'un revêtement.

10. Procédé selon l'une ou l'autre de la revendication 8 ou la revendication 9, **caractérisé en ce que** le support est au moins partiellement enduit avec l'agent coagulant avant l'immersion.

11. Procédé de fabrication d'un vêtement, le procédé consistant à :
a) fournir un support ;
b) recouvrir de manière facultative le support d'un revêtement ;
c) fournir une dispersion de précurseur constituée d'un latex ou d'un plastisol d'un polymère gélifiable, de particules d'un polymère gonflable dans l'eau comprenant moins de 30% en poids de matière soluble dans l'eau, et d'eau ;
d) immerger le support dans la dispersion de précurseur pour former une couche du précurseur d'un polymère gélifiable sur le support ;
e) retirer le support de la dispersion de précurseur ;
f) gélifier le polymère gélifiable ; et
g) sécher le polymère gélifié, ce qui entraîne une contraction des particules du polymère gonflable dans l'eau laissant des vides dans le polymère en bloc, de manière à produire un polymère expansé.
